# EUROPEAN PATENT SPECIFICATION

(11) **EP 4 061 987 B1**
(45) Date of publication and mention of the grant of the patent: **29.05.2024**
(21) Application number: 20807415.3
(22) Date of filing: 19.11.2020
(51) Int. Cl.: D04B 1/14

(54) **COMPOSITE MATERIALS COMPRISING A REINFORCING KNITTED STRUCTURE AND A RESIN, AND A PRODUCTION METHOD**
VERBUNDSTOFF UMFASSEND EIN VERSTÄRKUNGSGESTRICK UND HARZ, SOWIE EIN HERSTELLUNGSVERFAHREN
MATÉRIAUX COMPOSITES COMPRENANT UN RENFORT TRICOTÉ ET DE LA RÉSINE AINSI QUE UN PROCÉDÉ DE FABRICATION

(30) Priority: 22.11.2019 FR 1913108
(43) Date of publication of application: 28.09.2022
(73) Proprietor: Saint-Gobain Performance Plastics France, 89120 Charny Orée de Puisaye (FR)
(72) Inventor: DUMONT, Nicolas, 33170 Gradignan (FR); MAO, Gaëtan, 33600 Pessac (FR)
(74) Representative: Zimmermann & Partner Patentanwälte mbB
(86) International application number: PCT/EP2020/082700
(87) International publication number: WO 2021/099476

(56) References cited:
- EP-A2- 0 243 147
- WO-A1-2019/197319
- FR-A1- 2 780 419
- GB-A- 1 355 351

## Description

### TECHNICAL FIELD

The invention relates to the field of products made of composite material(s). The term composite materials is understood to mean a product comprising a matrix constituted from a polymeric material, in particular a thermoplastic or thermosetting material, this matrix being reinforced by a material having a melting point higher than the melting point of the polymeric material. FRP usually refers to "fiber-reinforced plastic".

### BACKGROUND ART

Reinforcements can be obtained in different ways: by adding mineral fibers dispersed in the matrix, by using a reinforcement made of steel or synthetic material, by using a fabric of reinforcing fibers, by the use of non-wovens or mats, or other products obtained by textile processes.

The fabric reinforcements have a flat structure and are composed of weft yarn and warp yarn arranged to be perpendicular. The manufacture thereof requires the use of a separate spool for each warp yarn.

More recently, the use of knitted reinforcements (knitted structures) has appeared. The term knitted reinforcements is understood to mean a product generally obtained from continuous yarn where the yarn forms interwoven meshes. The yarn can be of the monofilament or multi-filament type. The multi-filament can be a roving (i.e., a set of parallel continuous filaments assembled without twisting), a spun yarn (i.e., a set of short discontinuous fibers assembled by twisting). A yarn can also be an assembly of several yarns or filaments of different materials. This assembly can be used for twisting, braiding, etc. It is therefore possible to produce a yarn comprising polymeric material and reinforcing material. For example, it is possible to assemble a reinforcement yarn of the aramid, carbon, glass type, etc. and a thermoplastic yarn (polypropylene, polycarbonate, polyetherimide (PEI), etc.). This type of yarn is then called mixed yarn.

Compared to woven reinforcements, knitted reinforcements have many advantages.

Woven reinforcements pre-impregnated with polymeric material, for example gelled, which are generally called "prepregs", must be handled gently. They are sticky when the protective film is removed. They can only be kept for a limited period at room temperature.

The draping of woven reinforcements on a mold is a long and delicate operation. It requires the use of several layers of "prepreg", which must be cut and arranged judiciously according to the shape of the mold to ensure a sufficient thickness while avoiding too much overlap.

Cutting prepreg fabrics involves product scraps which can represent 30% of the material. In addition, making a fabric requires hundreds of spools.

The production of a traditional knit requires only one spool of yarn for the yarn mesh. Different knitting techniques make it possible to obtain knits forming a single piece, in 3D, without sewing. Known knitting techniques allow circular knitting or straight knitting to be carried out.

A distinction is made between weft knitting methods and warp knitting methods.

In weft knitting, (also called picked stitch), the yarn preferably follows the direction of the rows (weft direction by analogy to a fabric). Each loop of the same row is knitted one after the other. Each row is knitted one after the other. A single yarn can be used to produce the entire knit. Each needle is controlled individually, and it is possible to achieve a complex 3D shape during knitting.

In warp knitting (also known as throw stitch), the yarn preferably follows the direction of the columns (warp direction by analogy to a fabric). All the loops in the same row are knitted at the same time. Each row is knitted one after the other. One yarn is needed per mesh column. The needles are linked in different groups. It is possible to individually control the groups but not the needles constituting them. The knits produced are flat. Thickness is nevertheless possible but no complex 3D shapes.

In weft knitting technology, the support in which the knitting needles slide is called the needle bed. In the case of a machine using 2 needle beds, by convention, the needle bed closest to the user performs front stitches. The other forms the back stitches. Modern machines allowing individual selection of needles enable knitting on one needle bed at a time (single needle bed knitting) or on both needle beds simultaneously (double needle bed knitting). It is possible to use the two needle beds alternately, making it possible in particular to produce tubes or separate panels/skins depending on the link therebetween. We will then speak of simple needle bed knitting.

The application WO2013/025115 describes a composite product comprising a three-dimensional knitted reinforcement, consisting of two independent sheets connected by connecting fibers ("cross-threads"). The density of the connecting fibers ("connecting threads") in the reinforcement structure can vary from 10/cm² to 500/cm².

The density of the reinforcing structure can vary between 1 and 1000 dtex. This reinforcement offers great resistance to compression.

WO2019/197319A1 discloses a weft-knitted spacer fabric, which consists of an upper surface layer, intermediate spacer yarns, and a lower surface layer, wherein both of the upper surface layer and the lower surface layer use two yarns, non-elastic and elastic yarns, and there are tucks formed by the spacer yarns between the upper and lower surface layers, so that the upper surface is connected with the lower surface layer to form a three-dimensional structure in an integrated manner.

EP0243147A2 discloses a composite article reinforced with a fabric.

FR2780419A1 discloses a knitted fabric produced with at least one glass fiber filament and at least one filament which is of a different material. The document further discloses a knitted material comprising the knitted fabric, a reinforcement textile material covering one or both surfaces of the knitted fabric, wherein the material optionally is impregnated with a heat setting resin.

GB1355351A discloses a composite knitted fabric comprising two back-to-back fabric layers, each fabric layer being an interlocked fabric layer knitted of at least two respective stitch-forming yarns, the two fabric layers being interconnected by at least one interconnecting yarn knitted into the composite fabric so that needle loops of one of the fabric layers extend through respective connecting loops of the interconnecting yarn, said connecting loops of the interconnecting yarn extending across to said one fabric layer from the other fabric layer.

There is a need to provide reinforcing structures for producing composite material products of complex shape. In particular, there is a need to provide highly compressible reinforcements.

### BRIEF DESCRIPTION OF THE DRAWINGS

Embodiments are illustrated by way of example and are not limited in the accompanying figures. In the figures below, the representations are not necessarily to scale.
FIG. 1 represents a schematic sectional view of a comparative knitted reinforcing structure 100.
FIG. 2 is a photo of such a comparative structure 100.

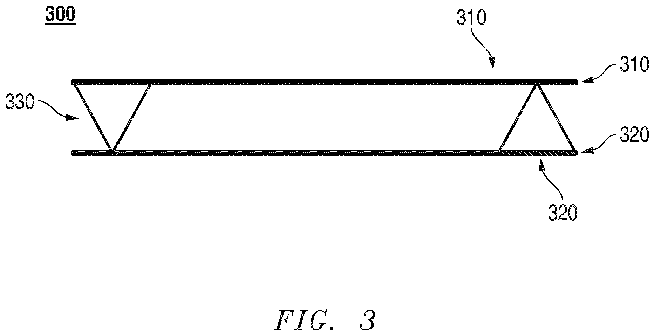

FIG. 3 represents a schematic sectional view of a knitted reinforcing structure 300 according to particular embodiments of the invention.

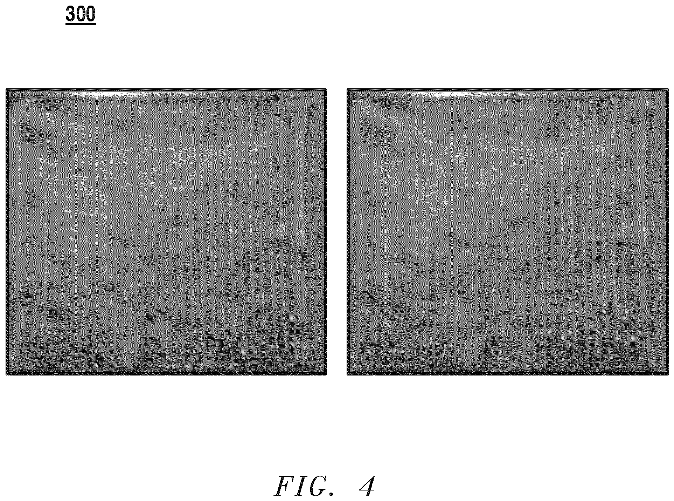

FIG. 4 represents a photo of such a knitted structure 300 according to the invention.
FIG. 5 is the stitch diagram 500 of a first exemplary embodiment.
FIG. 6 is the stitch diagram 600 of a second exemplary embodiment.

Skilled artisans appreciate that elements in the figures are illustrated for simplicity and clarity and have not necessarily been drawn to scale. For example, the dimensions of some of the elements in the figures may be exaggerated relative to other elements to help to improve understanding of embodiments of the invention. Further, the use of the same reference symbols in different drawings indicates similar or identical items.

### DETAILED DESCRIPTION OF THE PREFERRED EMBODIMENT(S)

Subject matter of the present invention is a composite product as defined in claim 1, and a method as defined in claim 9 for manufacturing the composite product of the present invention. The dependent claims relate to particular embodiments thereof.

According to particular embodiments, a particular knitting technique may be used to create a reinforcement for composite products which may have a very high compressibility.

According to yet other embodiments, the present invention relates to composite products that may include a resin matrix and a knitted reinforcing structure, which may have at least two skins, a front skin and a back skin, the at least two skins being connected by occasional links; the link density being between one link per 40 square stitches and one link per 10,000 square stitches.

For purposes of embodiments described herein, the link density may be defined by considering, for a surface of the knitted structure, the number of rows (X) multiplied by the number of columns (Y) and by counting the number of links (Z) created on this surface. A number of links are obtained per square stitch.

According to still other embodiments, the knitted structure may be, for example, made from a yarn of a reinforcing material chosen from glass, carbon, basalt, quartz, para-aramid, meta-aramid, polypropylene, polyamide, polyethylene terephthalate, polyester, flax, hemp, as well as thermoplastic materials such as polyetherimide, polyetheretherketone (PEEK), polyetherketoneketone (PEKK), polyphenylene sulfide (PPS); the kind will be chosen as a function of the melting point thereof which must be greater than the melting point of the resin constituting the matrix of the final composite product.

According to a particular embodiment, the knitted structure also may include an intermediate skin.

Advantageously, the link density of the structure may be between 1 link per 100 square stitches and one link per 5,000 square stitches, preferably between 1 link per 200 square stitches and one link per 1,000 square stitches.

According to a particular embodiment, the structure may be obtained by a weft knitting technique. According to certain embodiments, it may be a rectilinear or circular weft knitting method, preferably the rectilinear weft knitting technique may be used. This technique may have the advantage of making it easier to obtain complex 3D shapes than with the circular knitting technique.

According to a particular embodiment, the structure may have a jersey arrangement. However, the invention can be produced with any contextures (locknit, little dive, ringlet, openwork, knotted, etc.). The compressibility may be provided by the link density and not by the type of contexture.

Advantageously, the structure may have a three-dimensional structure adapted to the shape of the final composite product.

According to other embodiments, the basis weight of the knitted structure may be preferably between 200 to 4,000 g/m², more preferably between 800 and 2,000 g/m².

According to still other embodiments, the thickness of the knitted reinforcing structure may be preferably between 1 and 6 mm, more preferably between 2 and 4 mm, without presuming its final thickness after compression.

According to yet other embodiments, the composite product reinforced with a knitted structure may include, in particular, between 50 and 85% by volume of a resin or polymeric material, preferably between 55 and 80%, and more preferably between 60 and 75% and between 15 and 50% by volume of reinforcing fibers, preferably between 20 and 45%, more preferably between 25 and 40%. According to a particular embodiment, the resin or polymeric material may be chosen from thermoplastic materials such as polycarbonate, polypropylene, polyamide, polyurethane, PMMA, low density polyethylene terephthalate, polyetherimide, polyetheretherketone (PEEK), polyetherketoneketone (PEKK) and thermosets such as polyester and epoxy.

The present invention also may relate to a method of manufacturing a composite product, which may include the following steps:
manufacture of a knitted structure according to the above features,
   - impregnation of the knitted structure using a method of infusion at room temperature, with polymeric material having a melting point that may be lower than the melting point of the knitted reinforcement;
consolidation of the composite product, preferably by melting a thermoplastic material or by polymerization of a thermosetting material.

In particular embodiments, the knitted structure may have a complex 3D shape, similar or adapted to the final shape of the composite product.

According to other embodiments, a multi-wall knit can be produced by knitting several layers simultaneously.

According to another embodiment, the structure can be obtained by a warp knitting method. According to still other embodiments, the structure can be obtained by a 'multi-beam' knit.

According to still other embodiments, a beam carries a set of warp yarn which will form a skin. Therefore, one beam per skin may be needed.

Weft knitting can involve a double needle bed knitting with point links: ~ 1 per 100 square stitches (i.e., nearly 200 times less than the standard solution according to Example 1).

According to a second embodiment, the preform can be produced by knitting a reinforcing yarn, the polymeric material being introduced in a liquid form into a mold. According to a first embodiment, the preform can be produced by knitting a mixed yarn comprising polymeric material and reinforcing material.

The following examples illustrate the particular embodiments of the invention in a non-limiting manner.

Many different aspects and embodiments are possible. Some of those aspects and embodiments are described herein. After reading this specification, skilled artisans will appreciate that those aspects and embodiments are only illustrative and do not limit the scope of the present invention, which is defined by the appended claims.

### EXAMPLES

The concepts described herein will be further described in the following Examples, which do not limit the scope of the invention described in the claims.

### Example 1 (comparative): double needle bed knitting with regular links between the two needle beds.

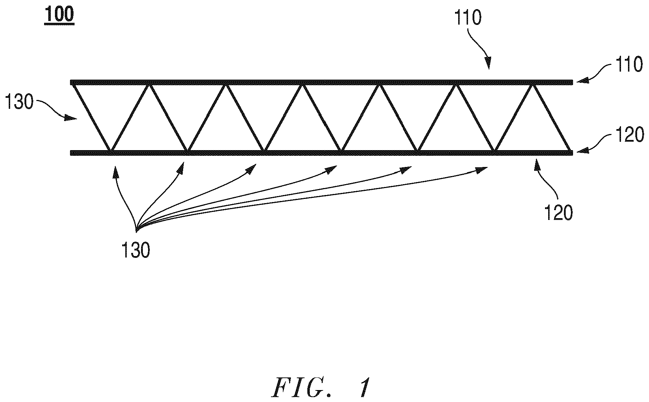

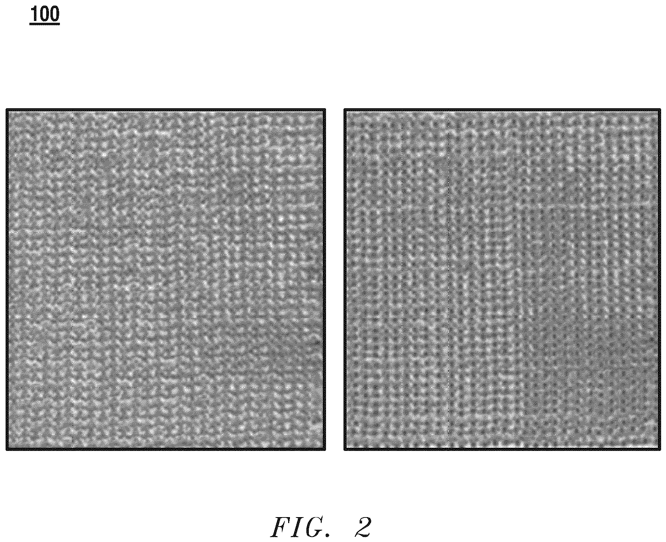

A knitted reinforcing structure according to this method is illustrated in FIGS. 1 and 2. As shown in FIG. 1, a knitted reinforcing structure 100 produced using a double needle bed machine has a front skin 110 and a back skin 120. The yarn used is fiberglass. Link fibers (i.e., links) 130 are arranged regularly and around 2 links per stitch.

The basis weight is 2897 g/m².

The number of rows/cm is 4.6483; the number of columns/cm is 3.7692.

The advantage of such a reinforcement according to the prior art is that it is stable because it is balanced between the front skin and the back skin.

The disadvantage of such a reinforcement is that the links act like beams which limit the compressibility of the material. If the vacuum/pressure conditions are not sufficient when injecting the plastic material, the resulting composite material is thicker. The resulting volume properties are lower. The composite material is either heavier or more porous, which further reduces the mechanical properties thereof.

A composite product is produced by impregnating the knitted reinforcement with polyester resin using an infusion method at room temperature.

The amount of fibers is 24% by volume per 76% by volume of resin.

Tensile tests are carried out.

The properties obtained are: a Young's modulus of 3.7-4.8 GPa and a tear strength of 46-57 MPa.

### Example 2 (comparative): single needle bed knitting.

A knitted reinforcing structure is produced with a glass yarn. Only one needle bed is used. According to this method, the reinforcement is fine and has good volume properties because it is dense.

The disadvantages are that the reinforcement is unstable because it is not balanced between the front and the back. It rolls over on itself. The production of the composite product is more complicated because the reinforcement requires time to be stabilized/fixed during the draping into a mold.

### Example 3 (according to an embodiment of the invention): double needle bed knitting with spaced links between the two needle beds.

A knitted reinforcing structure 300 is produced using a double needle bed machine so as to obtain a front skin 310 and a back skin 320. The yarn used is fiberglass.

The links 330 between the two skins are made by a known load-linking technique.

This technique consists of carrying out, for each link, a half-rise of a needle of one of the two needle beds, which causes the fiber to grip without forming a stitch. The link density is around 1 per 45 square stitches.

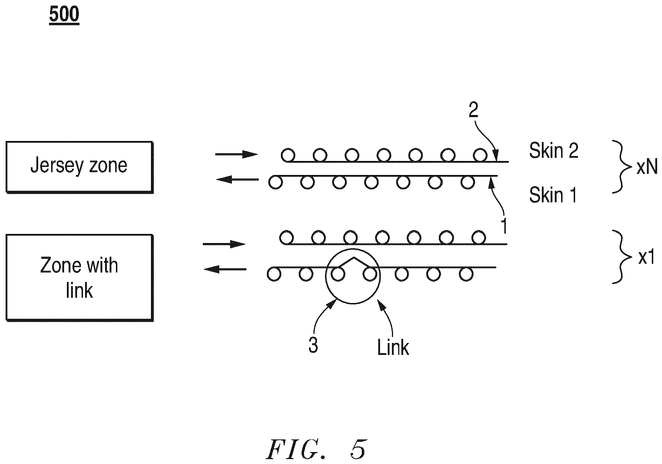

FIG. 5 illustrates the knit obtained.

The two skins are independent except at the link points. In this exemplary embodiment, the skins are made in jersey. The link is made by loading the fiber from skin 1 into skin 2.

The basis weight is 2868 g/m².

The thickness is 3 mm at rest.

The number of rows/cm is 4.4079; the number of columns/cm is 3.8569.

A composite product is produced by impregnating the knitted reinforcing structure with polyester resin using an infusion method at room temperature.

The amount of fibers is 34% by volume per 66 % by volume of resin.

Tensile tests are carried out.

The properties obtained are: a Young's modulus of 7 to 8 GPa and a tear strength of 80 to 90 MPa.

### Example 4 (according to an embodiment of the invention): double needle bed knitting with spaced links between the two needle beds.

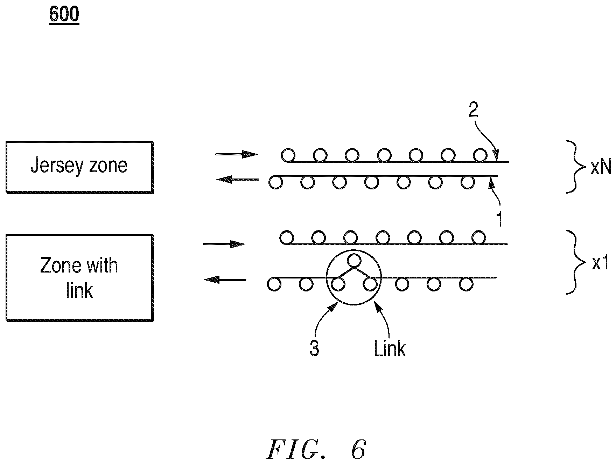

Link as shown in Figure 6 by one stitch.

FIG. 6 illustrates the production of a knitted reinforcing structure comprising two skins and links. The link density is around 1 per 45 square stitches.

The yarn used is of the glass type.

The two skins are independent except at the link points. Here the skins are made in jersey. The link is made by a stitch of the fiber of skin 1 on the opposite needle bed. At this point, to keep an equal number of stitches between the two skins, no stitch is knitted (floated) in skin 2.

The basis weight is 2868 g/m².

The thickness is 3 mm at rest.

The number of rows/cm is 4.4079; the number of columns/cm is 3.8569.

### A composite product is produced by impregnating the knitted reinforcing structure with polyester resin using an infusion method at room temperature.

The amount of fibers is 34% by volume per 66 % by volume of resin.

Tensile tests are carried out.

The properties obtained are: a Young's modulus of 7 to 8 GPa and a tear strength of 80 to 90 MPa.

The knitted reinforcing structures of the composite products according to the present invention have many advantages:
The reinforcing structure is stable because it is balanced between the front skin and the back skin. It can be set up easily and quickly.

The reinforcing structure is very compressible with good volume properties because it is dense.

A reinforcing structure including two skins gives the final product properties equivalent to two single needle bed reinforcing structures; hence a reduction in the draping time.

## Claims

1. A composite product comprising a resin and a knitted reinforcing structure (300), the knitted structure (300) having at least two skins (310, 320), connected by links (330)); **characterized in that** the link (330) density is between one link (330) per 40 square stitches and one link (330) per 10,000 square stitches.

2. The product according to claim 1, **characterized in that** the knitted structure (300) is produced from a fiber of a reinforcing material chosen from glass, carbon, basalt, quartz, para-aramid, meta-aramid, polypropylene, polyamide, polyethylene terephthalate, polyester, linen, hemp, thermoplastics, such as polyetherimide, polyetheretherketone (PEEK), polyetherketoneketone (PEKK), polyphenylene sulfide (PPS).

3. The product according to any one of the preceding claims, **characterized in that** the link (330) density is between one link (330) per 100 square stitches and one link (330) per 5,000 square stitches, preferably between one link (330) per 200 square stitches and one link (330) per 1,000 square stitches.

4. The product according to any one of the preceding claims, **characterized in that** the knitted structure (300) is obtained by a weft knitting technique.

5. The product according to any one of the preceding claims, **characterized in that** the knitted structure (300) is obtained by a rectilinear weft knitting technique.

6. The product according to any one of the preceding claims, **characterized in that** the knitted structure (300) has a three-dimensional shape adapted to the shape of the composite product.

7. The product according to any one of the preceding claims, comprising between 55 and 85% by volume of resin, in particular polymeric material and between 15 and 45% by volume of reinforcing fibers.

8. The product according to any one of the preceding claims, **characterized in that** the resin is a polymeric material chosen from thermoplastic materials such as polycarbonate, polypropylene, polyamide, polyurethane, PMMA, low density polyethylene terephthalate, polyetherimide, polyetheretherketone (PEEK), polyetherketoneketone (PEKK) and thermosetting materials such as polyester and epoxy.

9. A method for manufacturing a composite product according to any one of the preceding claims, **characterized in that** it comprises the following steps:
- manufacture of a knitted structure (300),
- impregnation of the knitted structure (300) according to an impregnation method with polymeric material,
- consolidation of the composite product.

10. The manufacturing method according to claim 9, **characterized in that** the polymeric material is thermoplastic material, the consolidation step being carried out by melting the thermoplastic material.

11. The manufacturing method according to claim 9, **characterized in that** the polymeric material is thermosetting material, the consolidation step being carried out by polymerization of the thermosetting material.

## Patentansprüche

1. Verbundprodukt, umfassend ein Harz und eine gewirkte Verstärkungsstruktur (300), wobei die gewirkte Struktur (300) mindestens zwei Häute (310,320), die durch Verbindungen (330) verknüpft sind, aufweist, **dadurch gekennzeichnet, dass** die Verbindungs(330)dichte zwischen einer Verbindung (330) pro 40 Quadratmaschen und einer Verbindung (330) pro 10.000 Quadratmaschen liegt.

2. Produkt nach Anspruch 1, **dadurch gekennzeichnet, dass** die gewirkte Struktur (300) aus einer Faser eines Verstärkungsmaterials produziert ist, das aus Glas, Kohlenstoff, Basalt, Quarz, para-Aramid, meta-Aramid, Polypropylen, Polyamid, Polyethylenterephthalat, Polyester, Leinen, Hanf, Thermoplaste, wie Polyetherimid, Polyetheretherketon (PEEK), Polyetherketonketon (PEKK), Polyphenylensulfid (PPS) ausgewählt ist.

3. Produkt nach einem der vorstehenden Ansprüche,
**dadurch gekennzeichnet, dass** die Verbindungs(330)dichte zwischen einer Verbindung (330) pro 100 Quadratmaschen und einer Verbindung (330) pro 5.000 Quadratmaschen, vorzugsweise zwischen einer Verbindung (330) pro 200 Quadratmaschen und einer Verbindung (330) pro 1.000 Quadratmaschen, liegt.

4. Produkt nach einem der vorstehenden Ansprüche,
**dadurch gekennzeichnet, dass** die gewirkte Struktur (300) durch eine Kulierwirktechnik erhalten wird.

5. Produkt nach einem der vorstehenden Ansprüche,
**dadurch gekennzeichnet, dass** die gewirkte Struktur (300) durch eine geradlinige Kulierwirktechnik erhalten wird.

6. Produkt nach einem der vorstehenden Ansprüche,
**dadurch gekennzeichnet, dass** die gewirkte Struktur (300) eine dreidimensionale Form, die an die Form des Verbundprodukts angepasst ist, aufweist.

7. Produkt nach einem der vorstehenden Ansprüche, umfassend zu zwischen 55 und 85 Vol.-% Harz, insbesondere ein polymeres Material, und zu zwischen 15 und 45 Vol.-% Verstärkungsfasern.

8. Produkt nach einem der vorstehenden Ansprüche,
**dadurch gekennzeichnet, dass** das Harz ein polymeres Material ist, das aus thermoplastischen Materialien wie Polycarbonat, Polypropylen, Polyamid, Polyurethan, PMMA, Polyethylenterephthalat niedriger Dichte, Polyetherimid, Polyetheretherketon (PEEK), Polyetherketonketon (PEKK) und duroplastischen Materialien wie Polyester und Epoxid ausgewählt ist.

9. Verfahren zum Herstellen eines Verbundprodukts nach einem der vorstehenden Ansprüche, **dadurch gekennzeichnet, dass** es die folgenden Schritte umfasst:
- Herstellen einer gewirkten Struktur (300),
- Imprägnieren der gewirkten Struktur (300) gemäß einem Imprägnierverfahren mit polymerem Material,
- Konsolidieren des Verbundprodukts.

10. Herstellungsverfahren nach Anspruch 9, **dadurch gekennzeichnet, dass** das polymere Material thermoplastisches Material ist, wobei der Konsolidierungsschritt durch Schmelzen des thermoplastischen Materials durchgeführt wird.

11. Herstellungsverfahren nach Anspruch 9, **dadurch gekennzeichnet, dass** das polymere Material duroplastisches Material ist, wobei der Konsolidierungsschritt durch Polymerisation des duroplastischen Materials durchgeführt wird.

## Revendications

1. Produit composite comprenant une résine et une structure de renforcement tricotée (300), la structure tricotée (300) ayant au moins deux couches (310, 320) reliées par des liens (330), **caractérisé en ce que** la densité de liens (330) est comprise entre un lien (330) par 40 points carrés et un lien (330) par 10 000 points carrés.

2. Produit selon la revendication 1, **caractérisé en ce que** la structure tricotée (300) est produite à partir d'une fibre d'un matériau de renforcement choisi parmi le verre, carbone, basalte, quartz, para-aramide, méta-aramide, polypropylène, polyamide, polyéthylène téréphtalate, polyester, lin, chanvre, thermoplastiques, tels que polyétherimide, polyétheréthercétone (PEEK), polyéthercétonecétone (PEKK), sulfure de polyphénylène (PPS).

3. Produit selon l'une quelconque des revendications précédentes, **caractérisé en ce que** la densité de liens (330) est comprise entre un lien (330) par 100 points carrés et un lien (330) par 5 000 points carrés, de préférence entre un lien (330) par 200 points carrés et un lien (330) par 1 000 points carrés.

4. Produit selon l'une quelconque des revendications précédentes, **caractérisé en ce que** la structure tricotée (300) est obtenue par une technique de tricotage trame.

5. Produit selon l'une quelconque des revendications précédentes, **caractérisé en ce que** la structure tricotée (300) est obtenue par une technique de tricotage trame rectiligne.

6. Produit selon l'une quelconque des revendications précédentes, **caractérisé en ce que** la structure tricotée (300) a une forme tridimensionnelle adaptée à la forme du produit composite.

7. Produit selon l'une quelconque des revendications précédentes, comprenant entre 55 et 85 % en volume de résine, en particulier de matériau polymère et entre 15 et 45 % en volume de fibres de renforcement.

8. Produit selon l'une quelconque des revendications précédentes, **caractérisé en ce que** la résine est un matériau polymère choisi parmi des matériaux thermoplastiques tels que polycarbonate, polypropylène, polyamide, polyuréthane, PMMA, polyéthylène téréphtalate basse densité, polyétherimide, polyétheréthercétone (PEEK), polyéthercétonecétone (PEKK) et des matériaux thermodurcissables tels que polyester et époxy.

9. Procédé de fabrication d'un produit composite selon l'une quelconque des revendications précédentes, **caractérisé en ce qu'**il comprend les étapes suivantes :
- fabrication d'une structure tricotée (300),
- imprégnation de la structure tricotée (300) selon un procédé d'imprégnation avec un matériau polymère,
- consolidation du produit composite.

10. Procédé de fabrication selon la revendication 9, **caractérisé en ce que** le matériau polymère est un matériau thermoplastique, l'étape de consolidation étant réalisée par la fusion du matériau thermoplastique.

11. Procédé de fabrication selon la revendication 9, **caractérisé en ce que** le matériau polymère est un matériau thermodurcissable, l'étape de consolidation étant réalisée par la polymérisation du matériau thermodurcissable.
